(19) Europäisches Patentamt
European Patent Office
Office européen des brevets

(11) Veröffentlichungsnummer : **0 401 791 B1**

# (12) EUROPÄISCHE PATENTSCHRIFT

(45) Veröffentlichungstag der Patentschrift :
**15.02.95 Patentblatt 95/07**

(51) Int. Cl.[6] : **G11B 7/24,** G11B 7/00, G11B 11/03, G11B 11/08

(21) Anmeldenummer : **90110704.5**

(22) Anmeldetag : **06.06.90**

## (54) Verfahren zur Speicherung von Informationen.

(30) Priorität : **09.06.89 CH 2173/89**

(43) Veröffentlichungstag der Anmeldung :
**12.12.90 Patentblatt 90/50**

(45) Bekanntmachung des Hinweises auf die Patenterteilung :
**15.02.95 Patentblatt 95/07**

(84) Benannte Vertragsstaaten :
**CH DE FR GB IT LI**

(56) Entgegenhaltungen :
**US-A- 4 318 937**
**US-A- 4 415 685**
**US-A- 4 632 893**
**PATENT ABSTRACTS OF JAPAN, vol. 8, no. 57 (M-283)(1494) 15. März 1984 & JP-A-58 209 586**
**PATENT ABSTRACTS OF JAPAN, vol. 9, no. 319 (M-439)(2042) 14. Dezember 1985 & JP-A-60 154 097**

(56) Entgegenhaltungen :
**JOURNAL OF IMAGING TECHNOLOGY Bd. 12, Nr. 3, Juni 1986, Springfield, Virginia, USA, Seiten 140 - 143; J.E. KUDER: 'ORGANIC MATERIALS FOR OPTICAL DATA STORAGE MEDIA - AN OVERVIEW'**

(73) Patentinhaber : **CIBA-GEIGY AG**
**Klybeckstrasse 141**
**CH-4002 Basel (CH)**

(72) Erfinder : **Mizuguchi, Jin, Dr.**
**Rte de Schiffenen 7**
**CH-1700 Fribourg (CH)**
Erfinder : **Rochat, Alain Claude, Dr.**
**Route de Schiffenen 38,**
**CH-1700 Fribourg (CH)**

(74) Vertreter : **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

**EP 0 401 791 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Verfahren zur Speicherung von Informationen durch Lösungsmittelbehandlung einer organischen Aufzeichnungsschicht, die ein Chinacridon, ein Dithiochinacridon, ein Chinacridonchinon, ein Phthalocyanin, ein Diketo-, Monoketomonothioketo- oder Dithioketo-pyrrolopyrrol enthält, Verfahren zum Ablesen dieser Informationen, sowie das so beschriftete Material.

Optische Aufzeichnungsträger und -medien zur Speicherung von Informationen sind bekannt. [Vgl. z.B. "Farbmittel/Polymer-Systeme als Datenspeicher" von G. Kämpf et al, in Werkstofftechnik, S. 1077-1081, Carl Hanser Verlag, München 1986; oder "Erasable laser recording in an organic dye-binder optical disk medium", von M.C. Gupta et al, in J. Appl. Phys. 60 (8), 1986, S. 2932-2937.] Dabei erfolgt das Aufzeichnen der Informationen durch Behandlung mit Licht bestimmter Wellenlängen und Intensität oder mit anderen geeigneten energiereichen Strahlen, wie z.B. mit einem Laser. Durch Absorption der Strahlung tritt an den bestrahlten Stellen lokale Erwärmung ein, so dass an der Oberfläche des Aufzeichnungsträgers und/oder -mediums durch Verdampfen, Erweichen oder Schmelzen Vertiefungen erzeugt werden oder lokale Phasenumwandlungen erzeugt werden, welche zu einer Veränderung des Brechungsindexes oder der Reflexion führen. Mittels Laser lassen sich z.B. Löcher, Blasen oder Vertiefungen von etwa 1 is mehrere $\mu m^2$ Grösse erzeugen, wobei das Auslesen dieser Informationen ebenfalls mittels einem Laser geringerer Intensität unter Ausnutzung des geänderten Reflexions- bzw. Lichtstreuverhaltens dieser Löcher/Blasen/Vertiefungen oder Phasenumwandlung geschieht. Geeignete Aufzeichnungsmaterialien sind z.B. Metalle, Metalloxide, Kunststoffe oder sonstige lichtabsorbierende Schichten enthaltend z.B. Farbstoffe.

So werden z.B. in den U.S. Patenten Nr. 4307047 und 4391764 zur Beschriftung von spritzgegossenen Kunststoffteilen strahlungsempfindliche Zusatzstoffe, wie Wärmestrahlungsindikatoren, Russ oder Graphit, dem Kunststoff beigemengt, so dass an den bestrahlten Stellen eine visuelle Markierung erzeugt wird.

Es ist weiterhin gemäss der EP-A-190 997 bekannt, hochmolekulare organische Materialien durch Verwendung von Pigmenten oder polymerlöslichen Farbstoffen unter Laserbestrahlung so zu beschriften, dass dabei die Oberfläche des beschrifteten Materials von Auge erkennbar nicht beschädigt wird.

In der US-A-4,318,937 wird ein hitze- und lösungsmittelempfindliches Aufzeichnungsmaterial beschrieben, das aus einem transparenten Träger und einer undurchsichtigen Deckschicht aus fein verteilten Polystyrolpartikeln besteht. Durch die Einwirkung eines Lösungsmittels auf die Deckschicht wird diese transparent und die Information somit eingeschrieben. Das Verfahren eignet sich für die Erzeugung von Projektionsfolien.

Es ist ferner auch bekannt, die Lichtabsorption bestimmter organischer Verbindungen als getrennte Schicht oder in einem Substrat eingebaut, durch Dampfbehandlung zu verändern bzw. zu verschieben. So wird die Lichtabsorption von Polymerfilmen enthaltend z.B. Vanadylphthalocyaninfarbstoffe durch Lösungsmitteldampfbehandlung nach längeren Wellenlängen verschoben [vgl. J. of Physical Chemistry, Vol. 89, Nr. 12, S.2652-2657 (1985)], währenddem eine entsprechende Lösungsmittelbehandlung von 1,4-Dithioketo-3,6-diphenyl-pyrrolo-[3,4-c]-pyrrol die Lichtabsorption in den nahen IR-Bereich verschiebt [vgl. J. of Imaging Science, Vol. 32, Nr. 3, Mai/Juni 1988, S. 135-140]. Im letztgenannten Dokument wird ausserdem noch erwähnt, eine derartige Eigenschaft bzw. die daraus im NIR-Spektralbereich resultierende Veränderung der Photoleitfähigkeit der so behandelten Filme in elektrophotographischen Applikationen zu verwenden.

Es wurde nun gefunden, dass man die Veränderung des Absorptionsspektrums und/oder die Veränderung der Photoleitfähigkeit bestimmter organischer Verbindungen nach deren Behandlung mit einem organischen Lösungsmittel vorteilhaft zur Speicherung von Informationen anwenden kann.

Der vorliegende Erfindungsgegenstand betrifft demnach ein Verfahren zur Speicherung von Informationen in einer organischen Aufzeichnungsschicht, durch lokale Behandlung ihrer Oberfläche mit einem organischen Lösungsmittel entsprechend der Form der zu markierenden Information um ihr Absorptionsspektrum und/oder ihre Photoleitfähigkeit so zu verändern, dass an den behandelten Stellen dieser Schicht Informationen erzeugt bzw. gespeichert werden, das dadurch gekennzeichnet ist, dass die organische Aufzeichnungsschicht ein Chinacridon, ein Dithiochinacridon, ein Chinacridonchinon, ein Phthalocyanin, ein Diketo-, Monoketomonothioketo- oder Dithioketo-pyrrolopyrrol enthält.

Beispiele von geeigneten Pyrrolopyrrolen sind 1,4-Diketo-3,6-diphenyl-pyrrolo-[3,4-c]-pyrrole (vgl. z.B. US-Patent Nr. 4415685) oder die entsprechenden 1,4-Dithioketo-3,6-diphenyl-pyrrolopyrrole (vgl. z.B. US-Patent Nr. 4632893).

Als Chinacridone eignen sich z.B. Derivate der Formeln (I) und (II)

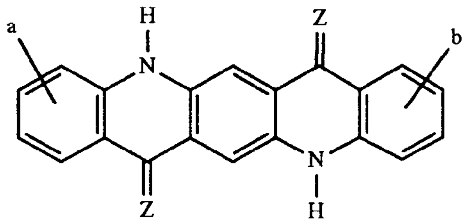 , 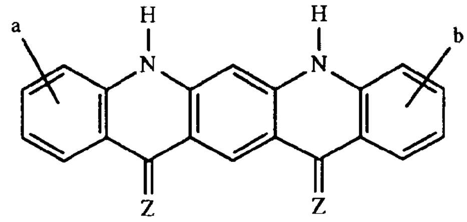 ,

(I) (II)

worin a und b -H, -Cl, -Br, $-CH_3$ oder $-OCH_3$ sind, und Z für O oder S steht. Ebenfalls geeignet ist das Chinacridonchinon der Formel

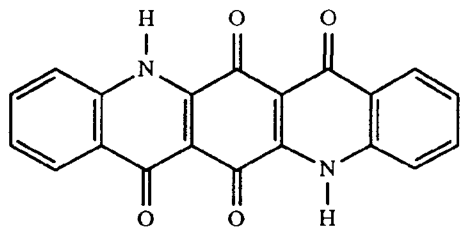 .

Bevorzugte Chinacridone sind unsubstituierte Dithiochinacridone gemäss obigen Formeln I und II, wobei a und b -H und Z S sind.

Geeignete Phthalocyanine sind z.B. Metallphthalocyanine, wie Titanyl-, Indium-, Chlorindium-, Aluminium-, Magnesium- und insbesondere Vanadyl-phthalocyanin sowie metallfreies Phthalocyanin, ferner metallfreie oder metallhaltige Naphthalocyanine, z.B. Titanyl-, Indium-, Chlorindium-, Aluminium-, Magnesium-, Kupfer-, Nickel- und Vanadyl-Naphthalocyanin.

Bevorzugte 1,4-Dithioketo-, 1-Monoketo-4-monothioketo- und 1,4-Diketo-3,6-diphenylpyrrolo-[3,4-c]-pyrrole haben die folgende Formel III

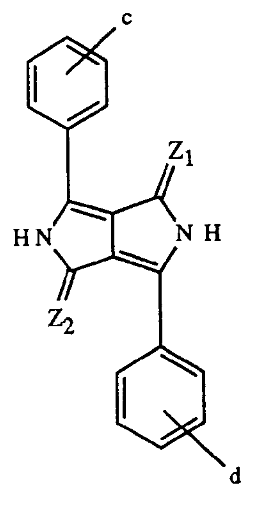 (III),

worin $Z_1$ und $Z_2$ unabhängig voneinander O oder S bedeuten, und c und d unabhängig voneinander -H, -Cl, $-CH_3$, $-OCH_3$, $-N(CH_3)_2$, $-SC_6H_5$ oder -S-Alkyl mit 1 bis 12 C-Atomen sind. $Z_1$ und $Z_2$bedeuten bevorzugt S. $C_1$-$C_{12}$-Alkyl ist z.B. Methyl, Ethyl, n-Propyl, n-Hexyl, n-Decyl und insbesondere n-Dodecyl.

Erfindungsgemäss ganz bevorzugt ist die Verbindung der Formel III, worin $Z_1$ und $Z_2$ Schwefel und c und d H bedeuten (nachstehend als DTPP abgekürzt).

Gemische von Pyrrolopyrrolen obiger Strukturen, Gemische von Chinacridonen, Dithiochinacridonen oder Phthalocyaninen, sowie auch Gemische dieser Pigmentklassen, können ebenfalls verwendet werden.

Zweckmässig werden gereinigte Aufzeichnungsmaterialien eingesetzt, z.B. nach Umkristallisation in einem geeigneten inerten organischen Lösungsmittel.

Die organische Aufzeichnungsschicht befindet sich auf einer Unterlage bzw. einem Substrat in an sich beliebiger Form und kann sowohl als getrennte Schicht vorliegen als auch bevorzugt zusammen mit einem organischen Polymer/Bindemittelsystem kombiniert werden, wobei sich die kombinierte Schicht im letztgenannten Fall entweder auf einer Unterlage befindet oder selbst gleichzeitig die Funktion des Substrates übernimmt.

Als Unterlagen bzw. Substrate kommen beliebige Metalle, z.B. Metallplatten, -filme oder -folien aus z.B. Aluminium, Zink, Magnesium, Kupfer oder Legierungen dieser Metalle, ferner metallbedampfte Kunststofffolien, -filme oder -teile, z.B. aluminiumbedampfte Kunststoffe, ferner Glas, Keramik, Papier, Holz oder beliebige Kunststoffe in Frage.

Liegt die organische Schicht als getrennte Schicht vor, so wird sie zweckmässig im Vakuum auf die Unterlage aufgedampft. Wird sie mit einem Polymersystem kombiniert, so wird das organische Aufzeichnungsmaterial zweckmässig zusammen mit dem Polymer bzw. dem Bindemittel nach bekannten Verfahren fein vermischt, und das Gemisch wird dann auf eine geeignete Unterlage aufgetragen oder selbst verformt.

Besteht der Schichtaufbau des Aufzeichnungsmaterials aus einer einzigen Schicht, so besteht diese aus einer oder mehreren definitionsgemässen organischen Verbindungen zweckmässig in fein verteilter Form, welche gegebenenfalls zusammen mit einem organischen Polymer bzw. Bindemittel kombiniert werden kann/können. Das Polymer/Bindemittel ist zweckmässig filmbildend, isolierend und, falls die Aufzeichnungsschicht auf eine Unterlage/ein Substrat aufgetragen wird, adhäsiv. Je nach Anwendung ist das Polymer-/Bindemittelsystem löslich in organischen Lösungsmitteln oder in basischen Mischungen organischer Lösungsmittel, die gegebenenfalls Wasser enthalten. Besonders geeignet sind Bindemittel/Polymere auf der Basis von Polykondensations- und Polyadditionsprodukten, wie Polyamide, Polyurethane, Polyester, Epoxyharze, Phenoxyharze, Polyketone, Polycarbonate, Polyvinylketone, Polystyrole, Polyvinylcarbazole, Polyacrylamide, Polymethylmethacrylate, Polyvinylbutyrale, Polyvinylchloride sowie Copolymerisate, wie z.B. Styrol-Maleinsäureanhydrid-Copolymere oder Styrol-Methacrylsäure-Methacrylsäureester-Copolymere. Bevorzugt sind transparente Polymere/Bindemittel, wie z.B. Polycarbonate, Acrylharze, Alkydmelaminharze, Polymethylmethacrylate und Epoxyharze.

Der Schichtaufbau kann auch aus mehreren Schichten bestehen. In diesem Fall werden bevorzugt auf eine Unterlage bzw. ein Substrat zuerst eine dünne lichtreflektierende Metallschicht, z.B. eine dünne Aluminiumfolie, und dann auf diese die erfindungsgemäss in Frage kommende organische Aufzeichnungsschicht aufgetragen. Ein derartiges System ist für das sogenannte Reflexionsverfahren beim Ablesen der Informationen besonders geeignet.

Die lichtreflektierende Schicht sollte so beschaffen sein, dass diese das beim Ablesen zum Abtasten verwendete Licht möglichst quantitativ reflektiert. Geeignete lichtreflektierende Materialien sind z.B. Aluminium, Rhodium, Gold, Zinn, Blei, Wismut, Kupfer und dielektrische Spiegel. Die Dicke der lichtreflektierenden Schicht soll so gross sein, dass diese das zum Abtasten benutzte Licht möglichst vollständig reflektiert. Für diesen Zweck sind Spiegel mit hoher Reflexion bei der in Frage kommenden Wellenlänge vorteilhaft. Die Licht reflektierende Schicht weist vorteilhaft eine optisch glatte, ebene Oberfläche auf und ist an der Oberfläche so beschaffen, dass die Aufzeichnungsschicht darauf fest haftet.

Das Aufbringen der verschiedenen Schichten kann auch so durchgeführt werden, dass auf einer transparenten Unterlage bzw. dem Substrat zuerst eine transparente leitfähige Schicht als Elektrode, dann die organische Aufzeichnungsschicht und schliesslich auf diese eine dünne leitfähige Metallschicht aufgebracht wird. Ein derartiger Schichtaufbau ist für das Photoleitfähigkeitsverfahren beim Ablesen der Informationen besonders geeignet. Dabei ist die Form der beiden Elektroden zweckmässig so beschaffen, dass sie in Form eines dünnen Streifens (z.B. zwischen etwa 1 und einige 100 μm) mit lithographischer Technik oder mit Hilfe einer Maske hergestellt werden. Ausserdem können diese Elektroden untereinander so ausgerichtet sein, dass sie sich auf der unteren und oberen Schicht kreuzen. Eine derartige Anordnung ist für die Speicherung von Informationen z.B. auf sogenannten "Security Cards", "PROM (programmable read only memory)" oder "optical PWB (printed wiring board)" besonders vorteilhaft. Das Aufzeichnungsmaterial kann auch noch weitere Farbmittel, wie anorganische oder organische Pigmente oder polymerlösliche Farbstoffe, enthalten, die gegenüber der erfindungsgemäss vorgenommenen Lösungsmittelbehandlung inaktiv sind.

Wie bereits oben gesagt, kann das Aufbringen der anmeldungsgemässen Aufzeichnungsschicht und der metallischen Reflexionsschichten durch Aufdampfen im Vakuum erfolgen. Das aufzubringende Material wird zunächst in ein geeignetes Gefäss gegebenenfalls mit einer Widerstandsheizung gefüllt und in eine Vakuumkammer gesetzt. Das zu bedampfende Substrat wird oberhalb des Gefässes mit dem aufzudampfenden Material in einen Halter eingesetzt. Dieser ist so konstruiert, dass das Substrat gegebenenfalls rotiert (z.B. mit 50 Upm) und geheizt werden kann.

Die Vakuumkammer wird auf etwa $1{,}3 \cdot 10^{-5}$ bis $1{,}3 \cdot 10^{-6}$ mbar ($10^{-5}$ bis $10^{-6}$ Torr) evakuiert, und die Heizung

wird so eingestellt, dass die Temperatur des aufzudampfenden Materials bis zu dessen Verdampfungstemperatur ansteigt. Die Verdampfung wird solange fortgesetzt, bis die aufgedampfte Schicht die gewünschte Dicke hat. Je nach Systemaufbau wird zuerst die organische Aufzeichnungsverbindung und dann die reflektierende Schicht aufgebracht, oder es kann umgekehrt verfahren werden. Auf das Aufbringen einer reflektierenden Schicht kann gegebenenfalls verzichtet werden.

Die Dicke der beim Aufdampfen aufwachsenden Schicht kann mit Hilfe bekannter Verfahren überwacht werden, z.B. mit Hilfe eines optischen Systems, welches während der Aufdampfung das Reflexionsvermögen der mit dem Absorptionsmaterial bedeckten Reflexionsoberfläche misst. Vorzugsweise wird das Wachsen der Schichtdicke mit einem Schwingquarz verfolgt.

Alle oben erwähnten Schichten können noch geeignete Zusätze, wie Egalisiermittel, oberflächenaktive Mittel oder Weichmacher, enthalten, um die physikalischen Eigenschaften der Schichten zu verbessern.

Die organische Schicht beträgt für das Reflexionsverfahren zweckmässig 200 bis 3000 Å, insbesondere 700 bis 1800 Å; für das Photoleitfähigkeitsverfahren liegt die Schichtdicke zweckmässig zwischen 400 und 6000 Å, insbesondere zwischen 700 und 3500 Å.

Die lokale Behandlung der organischen Aufzeichnungsschicht erfolgt mit einem organischen Lösungsmittel im flüssigen oder gasförmigen Zustand, wobei das Lösungsmittel eine Veränderung im Absorptionsspektrum der definitionsgemässen Verbindungen und/oder eine Veränderung der Photoleitfähigkeit erzeugt.
Dies geschieht dadurch, dass man das wie oben beschrieben erhaltene Aufzeichnungsmaterial einer Lösungsmittelbehandlung unterzieht, wie z.B. mit einem Keton, insbesondere einem aliphatischen Keton, wie Aceton, Methylethylketon und Methylisobutylketon, oder Cyclohexanon, mit einem aliphatischen Alkohol, wie Methanol, Aethanol oder Isopropanol, mit einem aliphatischen Ether oder Ester, wie z.B. Diethylether oder Ethylacetat, ferner mit Tetrahydrofuran, mit Glykolethern, wie Ethylenglykolmonoethyl- oder -monomethylether oder Diethyl- oder Dimethylglykolether, mit einem aliphatischen oder aromatischen Kohlenwasserstoff, wie z.B. n-Hexan, n-Decan, Toluol, Xylole, Chlorbenzol, Dichlorbenzole, Nitrobenzol oder Trichlorbenzole, ferner mit einem halogenierten aliphatischen Kohlenwasserstoff, wie z.B. Methylenchlorid, Aethylenchlorid und Chloroform, sowie mit einem polaren Lösungsmittel, wie Acetonitril, Formamid, Dimethylformamid, Dimethylsulfoxid, N-Methylpyrrolidon oder Dimethylacetamid, sowie mit Gemischen der oben erwähnten Flüssigkeiten.

Bei der Wahl des Lösungsmittels bzw. eines Gemisches davon ist besonders darauf zu achten, dass die Viskosität der Flüssigkeit bei der Behandlungsstufe in bezug auf das Bespritzen der organischen Aufzeichnungsschicht optimal ist.

Bevorzugt sind organische Lösungsmittel oder Gemische davon in flüssigem Zustand.

Bevorzugte Lösungsmittel sind Aceton, Methylethylketon, Methylisobutylketon, Methanol, Ethanol, Ethylacetat, Tetrahydrofuran und Dimethylformamid oder ein Gemisch davon.

Zweckmässig erfolgt die Behandlung mit einer Düse geeigneter Grösse und Form, wobei die Düse aus einem oder mehreren Röhren bestehen kann. Geeignete Düsen sind z.B. die sogenannten "ink-jet-printer"-Einrichtungen.
Dabei wird die Behandlung entsprechend der Form und der Grösse der auf die Oberfläche des zu markierenden Materials aufzubringenden Information durchgeführt bzw. gerichtet, wobei an den behandelten Stellen eine Veränderung im Absorptionsspektrum und/oder eine Veränderung der Photoleitfähigkeit erzeugt wird. Bevorzugt wird die Lösungsmittelbehandlung dynamisch geführt, indem die Flüssig- oder Dampfbehandlung dynamisch vorgenommen wird und das zu markierende Material statisch bleibt.

Die Beschriftung kann punktuell (Punkt für Punkt) oder linienförmig erfolgen, wobei die verschiedensten Beschriftungsarten erhalten werden können. Beispiele hierfür sind sowohl visuelle als nicht visuelle Informationen bis im Microbereich, z.B. zwischen etwa 1 und 100 µm und mehr, wie variable Textprogrammierung von numerischen Zeichen, Textprogramme von Standardzeichen oder Sonderzeichen wie Namenszüge, Signete oder sich oft wiederholende Daten, fortlaufende Stückzahlnumerierung, Eingabe von Messgrössen, beliebige Zeichnungen oder Figuren, aber auch Dekorationen. Ein typisches Anwendungsbeispiel ist ein Photorezeptormuster von verschiedenen Figuren oder Bildern, welches nach konventionellen elektrophotographischen Verfahren mit integraler Belichtung funktioniert.

Das erfindungsgemässe Verfahren ermöglicht eine Beschriftung/Speicherung von Informationen mit hoher Zuverlässigkeit, welche deformationsstabil, licht- und wetterbeständig und gut lesbar sind, und saubere Randzonen haben. Ferner sind sie gegenüber Temperaturveränderungen und UV-Strahlen sehr beständig.

Ausserdem ist das optische System des vorliegenden Verfahrens einfacher als diejenigen der bestehenden kompakten Disk-Systeme.

Wie oben bereits erwähnt, tritt nach dem vorliegenden Verfahren unter Lösungsmittel- behandlung an der (den) bestrahlten Stelle(n) des Materials eine Veränderung im Absorptionsspektrum und/oder eine Veränderung der Photoleitfähigkeit ein. Die Veränderung im Absorptionsspektrum bzw. die gespeicherte Information kann visuell, z.B. als Farbumschlag mit einem ausgeprägten Kontrast, oder aber mit einem geeigneten sogenannten Microleser abgelesen werden.

Geeignete Microleser sind z.B. energiearme Laser, z.B. Laserdioden, die den Farbumschlag bzw. die Veränderung im Absorptionsspektrum erfassen können, ohne dass dabei die sich im Material befindliche(n) Information(en) zerstört wird(werden), ferner Spektrophotometer, welche die spektralen Aenderungen im UV-, sichtbaren oder IR-Bereich der beschrifteten Schicht und die daraus resultierende Veränderung der Transmission, Reflexion oder Absorption messen können, wie z.B. ein UV/NIR Lambda 9 Spektrophotometer der Firma Perkin-Elmer oder ein mikroskopischer UMSP 80 Spektrophotometer der Firma Carl Zeiss.

Mit den erfindungsgemäss in Frage kommenden Chinacridonen, Chinacridonchinonen, Phthalocyaninen, Monoketomonothioketo- und Dithioketopyrrolopyrrolen erfolgt die spektrale Veränderung im IR-Bereich, währenddem die Absorptionsänderung der Diketopyrrolopyrrol-Derivate im sichtbaren Bereich erfolgt.

Z.B. zeigt 1,4-Diketo-3,6-diphenyl-pyrrolo-[3,4c]-pyrrol (DPP) nach Behandlung eine visuelle Farbveränderung von rot nach orange (Erhöhung der Absorption auf 450 nm), das entsprechende 1,4-Dithioketo-Derivat eine spektrale Veränderung von 690 nm auf 830 nm, Dithiochinacridon [vgl. obige Formel I; a und b = H; Z = S] eine spektrale Veränderung von 700 nm auf 770 nm und Vanadylphthalocyanin eine Erhöhung der Absorption auf 820 nm.

Wird die Information mittels Reflexion abgelesen, so ist es zweckmässig, zwischen das Substrat und die erfindungsgemässe organische Aufzeichnungsschicht eine möglichst vollständig reflexierende Schicht einzubauen, z.B. eine dünne Metallfolie z.B. aus Aluminium, Gold, Platin oder Silber. Diese Schicht kann geklebt, insbesondere aber aufgedampft werden.

Bei Verwendung von Verbindungen der Formel III, insbesondere aber von DTPP (1,4-Dithio-3,6-diphenyl-pyrrolo-[3,4.c]-pyrrol), kann die Veränderung der Reflexion dadurch verbessert werden, dass man derartige Verbindungen mit einer Säure vorbehandelt. Die Säurebehandlung kann unmittelbar vor der Ausfällung der in Frage kommenden DTPP-Verbindung durchgeführt werden, oder man bringt die ausgefällte DTPP-Verbindung wieder in Lösung und gibt dann die Säure der Lösung zu. Eine derartige Vorbehandlung führt dazu, dass das Absorptionsspektrum der obigen Verbindungen der Formel III verändert wird bzw. die Absorption der Verbindungen im spektralen Bereich 700-800 nm abnimmt, was nach der erfindungsgemässen Lösungsmittelbehandlung zu einer noch grösseren Absorptionsveränderung führt.

Z.B. eine aufgedampfte DTPP-Schicht zeigt eine Absorptionsschulter zwischen etwa 770 und 800 nm. Wird DTPP (z.B. in einem organischen Lösungsmittel gelöst) mit einer Säure behandelt und dann ausgefällt oder umkristallisiert, so verändert sich das Absorptionsspektrum dieser Verbindung insofern, dass die Schulter zwischen 770-800 nm vollständig verschwindet. Der dann nach der erfindungsgemässen Lösungsmittelbehandlung gemessene Reflexionsunterschied kann somit von etwa 30 % bis auf 80 % und mehr verbessert werden.

Eine derartige Vorbehandlung mit einer Säure erfolgt zweckmässig durch Lösen einer Verbindung der Formel III in einem organischen Lösungsmittel und anschliessende Zugabe einer Säure. Nach Stehenlassen der so erhaltenen Lösung, zweckmässig zwischen 1 Minute und zwei Stunden, wird die Lösung auf Eis oder in Eis/Wasser gegossen oder umkristallisiert. Das ausgefallene Produkt wird dann nach üblichen Verfahren isoliert und getrocknet, z.B. durch Filtration und anschliessendes Trocknen, z.B. bei 50°C unter Vakuum. Die so vorbehandelte Verbindung kann dann wie oben bereits angegeben als Aufzeichnungsschicht präpariert werden.

Für diese Vorbehandlung geeignete Lösungsmittel sind z.B. Ketone, insbesondere aliphatische Ketone, wie Aceton, Methylethylketon und Methylisobutylketon, oder Cyclohexanon, aliphatische Alkohole, wie Methanol, Ethanol oder Isopropanol, aliphatische Ether oder Ester, wie z.B. Diethylether oder Ethylacetat, ferner Tetrahydrofuran, Glykolether, wie Ethylenglykolmonoethyl- oder monomethylether oder Diethyl- oder Dimethylglykolether, ferner 1-Acetoxy-2-ethoxy-ethan, sowie polare Lösungsmittel, wie Acetonitril, Formamid, Dimethylformamid, Dimethylsulfoxid, N-Methylpyrrolidon oder Dimethylacetamid, sowie Gemische der oben erwähnten Flüssigkeiten.

Bevorzugte Lösungsmittel sind z.B. Aceton, Ethanol, N-Methylpyrrolidon und 1-Acetoxy-2-ethoxy-ethan, vor allem aber Dimethylformamid und insbesondere Dimethyl- sulfoxid (DMSO).

Geeignete Säuren sind organische oder anorganische Säuren, wie z.B. Ameisensäure, Essigsäure oder Propionsäure, Mond, Di- oder Trichloressigsäure, Oxalsäure, Malonsäure, Bernsteinsäure, Phthalsäure, Benzol- oder Toluolsulfonsäure, ferner Phosphorsäure, Salpetersäure, Salzsäure oder Schwefelsäure. Bevorzugt sind z.B. Ameisensäure, Essigsäure, Salzsäure und Phosphorsäure, vor allem aber Salpetersäure und insbesondere Schwefelsäure.

Zweckmässig liegt die Säurekonzentration z.B. zwischen $10^{-6}$ und $10^{-2}$M (molar), besonders aber zwischen $10^{-5}$ und $10^{-3}$ M.

Erfindungsgemäss ganz bevorzugt ist das System DTPP/DMSO, das mit $H_2SO_4$, bevorzugt in etwa $2 \cdot 10^{-4}$ molarer Konzentration, vorbehandelt wird.

Für das Lesen der Information bei Transmission ist eine transparente Substratschicht zweckmässig, z.B. eine Polymethylmethacrylat- oder Polycarbonatschicht oder Glas.

Eine durch Lösungsmittelbehandlung erzeugte Veränderung der Photoleitfähigkeit kann mit einem eingebauten Messelektrodensystem gemessen werden.

Für das Ablesen der Information aufgrund der Photoleitfähigkeit verwendet man zweckmässig Aufzeichnungsmaterialien aus mehreren Schichten, z.B. indem auf dem transparenten Substrat zuerst eine leitfähige Unterlage als transparente Elektrode aufgetragen wird, darauf dann die erfindungsgemäss in Frage kommende organische Schicht und schliesslich eine zweite leitfähige Unterlage als Messelektrode aufgebracht werden.

Transparente Elektroden werden bevorzugt aufgedampft und sind z.B. aus Indiumdioxid, Indium-Zinnoxid, Antimon-Zinnoxid, Zinkoxid oder metallisierten organischen Filmen.

Messelektroden sind z.B. aus Al, Ni, Au oder Ag und liegen zweckmässig als dünne Folien vor.

In den folgenden Beispielen bedeuten Teile, sofern nicht anders angegeben, Gewichtsteile.

Beispiel 1: Aluminium-Pulver wird zunächst in ein geeignetes Gefäss gefüllt und in eine Vakuumkammer gesetzt; das zu bedampfende PET-Substrat (75 µm dickes Polyethylenterephthalat) wird oberhalb des Gefässes mit dem Aluminium-Pulver in einen Halter eingesetzt. Die Vakuumkammer wird dann bis auf etwa $3{,}9 \cdot 10^{-6}$ mbar [= $3 \cdot 10^{-6}$ Torr] so evakuiert, dass die Verdampfung erfolgen kann, bis die abgedampfte Schicht (Reflexionsschicht) eine Dicke von etwa 2000 Å hat [etwa 30 Å pro Sekunde]. Dann wird 1,4-Dithioketo-3,6-diphenyl-pyrrolo-[3,4-c]-pyrrol (DTPP) auf gleiche Art und Weise auf die Aluminiumschicht aufgedampft, bis die bedampfte Schicht etwa 1500 Å Dicke beträgt.

Punktuelle Informationen (etwa 125 um Durchmesser) werden dann mit einem Flüssigkeitgemisch aus Aceton-Ethanol 1:1 (Vol.) mittels eines Injektoren "®Thinkjet Printer" von Hewlett Packard behandelt bzw. beschriftet, wobei die Kunststoff-Düse des Injektors durch eine entsprechende Aluminium-Düse ersetzt wurde.

Das Reflexionsspektrum der die Informationen enthaltenden Schichtstellen wird dann mit Hilfe eines NIR-Spektrophotometers gemessen, wobei ein Reflexionsunterschied von 30 % bei 830 nm erhalten wird.

Beispiel 2: Eine Aufzeichnungsschicht von 1500 Å Dicke [erhalten durch Feindispergieren von 20 Gew.% unsubstituiertes Dithiochinacridon gemäss obiger Formel I in ®Lucite (PMMA von DuPont) und anschliessendes Aufziehen auf einer Aluminium-Platte mittels eines handelsüblichen Aufziehstabes] wird auf gleiche Art wie im obigen Beispiel 1 beschriftet, wobei aber anstelle eines Gemisches Aceton-Ethanol ein Gemisch Tetrahydrofuran/Methanol 1:1 (Vol.) verwendet wird. Der Reflexionsunterschied bei 830 nm beträgt 23 %.

Beispiel 3: Indium-Zinnoxid wird auf einem Glas-Substrat bis zu einer Dicke von 300 Å gesprüht (indem aus einer gesinterten Platte aus Indium-Zinnoxid mit einem Argon-Plasma Material (Indium-Zinnoxid) abgetragen und auf einem Glas-Substrat in Form einer dünnen Schicht abgeschieden wird). Auf diese leitende Oxidschicht wird dann eine 2500 Å dicke DTPP-Schicht unter Vakuum gemäss Beispiel 1 aufgedampft, worauf gleich wie im Beispiel 1 zuerst punktuelle Informationen gespeichert werden und die Aufzeichnungsschicht mit einer Aluminiumschicht bedampft wird.

Die so gespeicherten Informationen werden dann mit Hilfe eines GaAs-Diodenlasers bei 830 nm gelesen, wobei die Spannung von 40 Volt zwischen den beiden Elektroden (Aluminium und Indium-Zinnoxid) in Serie mit einem Widerstand von 1 M Ω angelegt und die Leitfähigkeit mit und ohne Licht gemessen wird. Die elektrische Spannung über den unbeschrifteten Punkten beträgt nur etwa 1/30 der Spannung über dem beschrifteten Gebiet (≈ 29,5 dB).

Definition von dB: $dB = 20 \log \frac{V_2}{V_1}$, wobei $V_2$:$V_1$ 30 beträgt.

[$V_1$ = Ausgangsspannung im Dunkel (ohne Licht); $V_2$ = Ausgangsspannung bei der Belichtung]

Beispiel 4: Das Verfahren gemäss Beispiel 3 wird wiederholt, mit dem Unterschied jedoch dass anstatt DTPP Titanylphthalocyanin verwendet wird und dass der Spannungsabfall bei einer Spannung von 25 Volt (statt 40 Volt) zwischen den Elektroden gemessen wird. Die Änderung der Spannung über den ungewandelten Punkten im Vergleich mit den gewandelten Punkten macht einen Faktor von ca. 18 (≈ 25,1 dB) aus.

Beispiel 5 (elektrophotographische Beschriftung):

Ein positiv aufladbarer Photorezeptor mit folgender Substratstruktur CGL/CTL/Al wird wie folgt hergestellt:

Das ladungstransportierende Material (CT) bestehend aus einer festen Lösung von 4-Diethylaminobenzaldehyd-1,1-diphenylhydrazon und Polycarbonat wird auf ein Aluminium-Substrat (etwa 50 µm dick) aufgetragen. Die ladungserzeugende Schicht (CG) [DTPP] wird dann auf die obige CT-Schicht unter Vakuum bis zu einer Dicke von 1000 Å gemäss Beispiel 1 aufgedampft; das System wird dann gemäss obigem Beispiel 1 mit punktuellen Informationen beschrieben bzw. gespeichert. Danach wird die Schicht mit einer Corona-Entladung aufgeladen und anschliessend mit einer Integralbelichtung (z.B. einer Wolframlampe) entladen. Die Photoempfindlichkeit beträgt etwa 3 $\mu J/cm^2$.

Die die Informationen enthaltende Aufzeichnungsschicht wird als Photorezeptormuster verwendet.

CGL = ladungserzeugende Schicht;
CTL = ladungstransportierende Schicht;
Al = Aluminiumsubstrat.

Corona-Entladung: Wenn eine hohe Spannung (z.B. ca. $10^5$ V/cm) zwischen zwei Elektroden angelegt wird, erfolgt eine Entladung, die "Corona-Entladung" heisst. Diese Entladung wird bei der Elektrophotographie verwendet, um den Photorezeptor aufzuladen.

Beispiel 6: Stickstoffgas wird bei 20°C während einer Stunde in 100 ml DMSO zur Sauerstoffentziehung eingeleitet, worauf 1,5 g DTPP in diesem Lösungsmittel gelöst und dann 1 ml konzentrierter Schwefelsäure zugegeben werden. Die erhaltene Lösung wird während 90 Minuten stehen gelassen und anschliessend auf Eis gegossen. Das ausgefällte Produkt wird abfiltriert und bei 50°C unter Vakuum während 6 Stunden getrocknet. Das Absorptionsspektrum dieses Produktes (als abgedampfter Film gemessen) zeigt im Vergleich zum nicht behandelten Produkt keine Schulter mehr zwischen 770 und 800 nm.

Mit dem so behandelten Produkt wird dann eine Aufzeichnungsschicht gemäss Beispiel 1 vorbereitet, wobei Aluminium-Pulver auf ein PET-Substrat (75 µm Dicke) verdampft wird, bis die abgedampfte Schichtdicke etwa 2000 Å beträgt. Dann wird DTPP auf gleiche Art und Weise wie im Beispiel 1 auf die Aluminiumschicht aufgedampft, bis die bedampfte Schicht etwa 1500 Å Dicke beträgt.

Punktuelle Informationen werden dann gleich wie im obigen Beispiel 1 beschriftet und gelesen. Das gemessene Reflexionsspektrum der die Informationen enthaltenden Schichtstellen zeigt einen Reflexionsunterschied von 85 % bei 830 nm zwischen der unbeschrifteten und der beschrifteten Schicht.

Beispiel 7: Das Beispiel 6 wird wiederholt, mit dem Unterschied jedoch, dass anstelle von 100 ml DMSO und 1 ml konzentrierter $H_2SO_4$ 100 ml NMP (N-Methylpyrrolidon) und 2 ml konzentrierter $HNO_3$, während 45 Minuten (statt 90) stehen gelassen und anstatt Eis 500 ml Wasser für die Ausfällung verwendet werden.

Das Absorptionsspektrum des so erhaltenen Produktes zeigt keine Schulter zwischen 770 und 800 nm, und der gemessene Reflexionsunterschied beträgt 80 % bei 830 nm.

Beispiel 8: Eine saure Vorbehandlung von DTPP wird gemäss Beispiel 6 wiederholt, worauf mit dem erhaltenen vorbehandelten Produkt eine Aufzeichnungsschicht nach Beispiel 2 hergestellt und beschriftet wird. Der Reflexionsunterschied bei 830 nm beträgt 70 %.

## Patentansprüche

1. Verfahren zur Speicherung von Informationen in einer organischen Aufzeichnungsschicht, durch lokale Behandlung ihrer Oberfläche mit einem organischen Lösungsmittel entsprechend der Form der zu markierenden Information um ihr Absorptionsspektrum und/oder ihre Photoleitfähigkeit so zu verändern, dass an den behandelten Stellen dieser Schicht Informationen erzeugt bzw. gespeichert werden, dadurch gekennzeichnet, dass die organische Aufzeichnungsschicht ein Chinacridon, ein Dithiochinacridon, ein Chinacridonchinon, ein Phthalocyanin, ein Diketo-, Monoketomonothioketo- oder Dithioketo-pyrrolopyrrol enthält.

2. Verfahren gemäss Anspruch 1, dadurch gekennzeichnet, dass man als Chinacridon oder Dithiochinacridon Verbindungen der Formeln

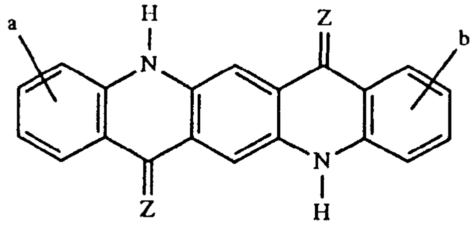
,
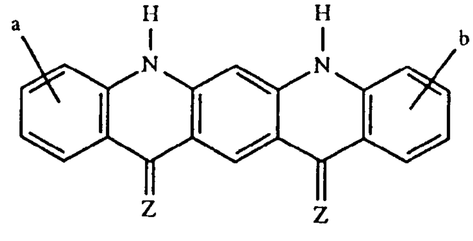
,

(I) (II)

verwendet, worin a und b -H, -Cl, -Br, $-CH_3$ oder $-OCH_3$ sind, und Z für O oder S steht.

3. Verfahren gemäss Anspruch 2, worin in den Formeln I und II a und b -H und Z S bedeuten.

4. Verfahren gemäss Anspruch 1, dadurch gekennzeichnet, dass als Diketo-, Monoketomonothioketo- bzw. Dithioketo-pyrrolopyrrole Verbindungen der Formel III

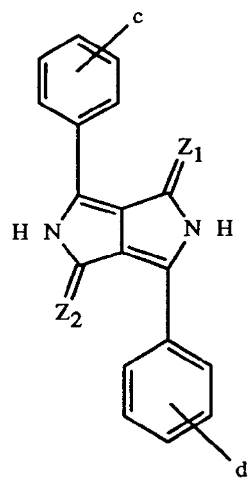

(III)

verwendet werden, worin $Z_1$ und $Z_2$ unabhängig voneinander O oder S bedeuten und c und d unabhängig voneinander -H, -Cl-, $-CH_3$, $OCH_3$, $-N(CH_3)_2$, $-SC_6H_5$- oder -S-Alkyl mit 1 bis 12 C-Atomen sind.

5. Verfahren gemäss Anspruch 4, wobei $Z_1$ und $Z_2$ S bedeuten.

6. Verfahren gemäss Anspruch 4, wobei $Z_1$ und $Z_2$ S und c und d H sind.

7. Verfahren gemäss Anspruch 1, dadurch gekennzeichnet, dass man die organische Aufzeichnungsschicht zusammen mit einem organischen Polymer/Bindemittel-System kombiniert.

8. Verfahren gemäss Anspruch 7, wobei man ein transparentes Polymer/Bindemittel aus der Polycarbonat-, Acrylharz-, Alkydmelamin-, Polymethylmethacrylat- oder Epoxy-Reihe verwendet.

9. Verfahren gemäss Anspruch 1, dadurch gekennzeichnet, dass die Aufzeichnungsschicht auf eine dünne lichtreflektierende Metallschicht aufgetragen wird, die ihrerseits auf einer Unterlage bzw. einem Substrat aufgetragen ist.

10. Verfahren gemäss Anspruch 1, dadurch gekennzeichnet, dass eine transparente Unterlage bzw. ein Substrat verwendet wird und auf der Unterlage zuerst eine transparente leitfähige Schicht als Elektrode, dann darauf die Aufzeichnungsschicht und anschliessend eine dünne leitfähige Metall-Schicht aufgebracht sind.

11. Verfahren gemäss Anspruch 1, dadurch gekennzeichnet, dass die Aufzeichnungsschicht für das Reflexionsverfahren 200 bis 3000 Å und für das Photoleitfähigkeitsverfahren 400 bis 6000 Å beträgt.

12. Verfahren gemäss Anspruch 1, dadurch gekennzeichnet, dass man die lokale Behandlung der organischen Aufzeichnungsschicht mit einem organischen Lösungsmittel oder einem Gemisch organischer Lösungsmittel in flüssigem Zustand durchführt.

13. Verfahren gemäss Anspruch 12, wobei das Lösungsmittel Aceton, Methylethylketon, Methylisobutylketon, Methanol, Ethanol, Ethylacetat, Tetrahydrofuran, Dimethylformamid oder ein Gemisch davon ist.

14. Verfahren gemäss Anspruch 1, dadurch gekennzeichnet, dass die durch Lösungsmittelbehandlung erzeugte spektrale Veränderung im Absorptionsspektrum bzw. die gespeicherte Information visuell oder mit einem Microleser abgelesen wird.

15. Verfahren gemäss Anspruch 1, dadurch gekennzeichnet, dass die durch Lösungsmittelbehandlung erzeugte Veränderung der Photoleitfähigkeit mit einem eingebauten Elektrodensystem gemessen wird.

16. Verfahren gemäss Anspruch 1, dadurch gekennzeichnet, dass die die Informationen enthaltende Aufzeichnungsschicht als Photorezeptormuster verwendet wird.

17. Verfahren gemäss Anspruch 4, dadurch gekennzeichnet, dass man die Verbindungen der Formel III mit einer Säure vorbehandelt.

18. Verfahren gemäss Anspruch 17, dadurch gekennzeichnet, dass man als Verbindung der Formel III 1,4-Dithioketo-3,6-diphenyl-pyrrolo-[3,4-c]-pyrrol (DTPP) und als Säure Schwefelsäure unter Verwendung von Dimethylsulfoxid als Lösungsmittel einsetzt.

## Claims

1. A process for the storage of information in an organic recording layer as the result of local treatment of its surface with an organic solvent in accordance with the shape of the information to be marked so as to alter its absorption spectrum and/or its photoconductivity in such a way that information is produced and stored respectively at the treated areas of this layer, wherein the organic recording layer contains a quinacridone, a dithioquinacridone, a quinacridonequinone, a phthalocyanine or a diketopyrrolopyrrole, monoketomonothioketopyrrolopyrrole or dithioketopyrrolopyrrole.

2. A process according to claim 1, wherein compounds of the formulae

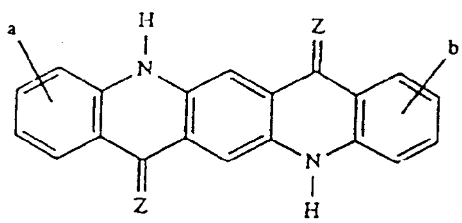

,

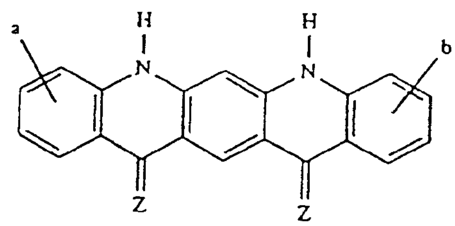

,

(I) (II)

in which a and b are -H, -Cl, -Br, $-CH_3$ or $-OCH_3$ and Z is O or S, are used as the quinacridone or dithioquinacridone.

3. A process according to claim 2, wherein, in the formulae I and II, a and b are -H and Z is S.

4. A process according to claim 1, wherein compounds of the formula III

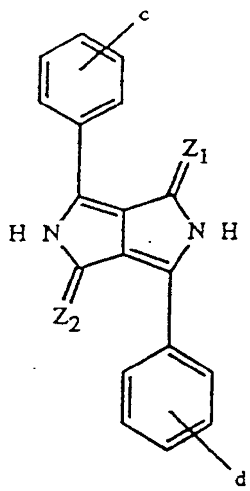

(III)

in which $Z_1$ and $Z_2$ independently of one another are O or S and c and d independently of one another are -H, -Cl-, $-CH_3$, $-OCH_3$, $-N(CH_3)_2$, $-SC_6H_5-$ or -S-alkyl having 1 to 12 C atoms, are used as the diketo-, monoketomonothioketo- or dithioketo-pyrrolopyrroles.

5. A process according to claim 4, wherein $Z_1$ and $Z_2$ are S.

6. A process according to claim 4, wherein $Z_1$ and $Z_2$ are S and c and d are H.

7. A process according to claim 1, wherein the organic recording layer is combined with an organic polymer/binder system.

8. A process according to claim 7, wherein a transparent polymer/binder belonging to the polycarbonate, acrylic resin, alkyd/melamine, polymethyl methacrylate or epoxy series is used.

9. A process according to claim 1, wherein the recording layer is applied to a thin, light-reflecting metal layer which, in turn, has been applied to a support and a substrate respectively.

10. A process according to claim 1, wherein a transparent support and a substrate respectively are used and a transparent conductive layer is first applied to the support as an electrode, then the recording layer is applied thereto and finally a thin conductive metal layer is applied.

11. A process according to claim 1, wherein the recording layer is 200 to 3000 Å for the reflectance process and is 400 to 6000 Å for the photoconductivity process.

12. A process according to claim 1, wherein the local treatment of the organic recording layer is carried out with an organic solvent or a mixture of organic solvents in the liquid state.

13. A process according to claim 12, wherein the solvent is acetone, methyl ethyl ketone, methyl isobutyl ketone, methanol, ethanol, ethyl acetate, tetrahydrofuran, dimethylformamide or a mixture thereof.

14. A process according to claim 1, wherein the spectral shift in the absorption spectrum produced by solvent treatment, or respectively the stored information, is read off visually or by means of a micro-reader.

15. A process according to claim 1, wherein the change in the photoconductivity produced by solvent treatment is measured with an incorporated electrode system.

16. A process according to claim 1, wherein the recording layer containing the information is used as a photoreceptor sample.

17. A process according to claim 4, wherein the compounds of the formula III are pre-treated with an acid.

18. A process according to claim 17, wherein 1,4-dithioketo-3,6-diphenylpyrrolo[3,4-c]pyrrole (DTPP) is employed as the compound of the formula III and sulfuric acid is employed as the acid, dimethyl sulfoxide being used as the solvent.

## Revendications

1. Procédé pour la mémorisation des informations dans une couche d'enregistrement organique par traitement local de sa surface avec un solvant organique conformément à la forme de l'information à marquer en vue de changer son spectre d'absorption et/ou sa photoconductivité de telle façon qu'on puisse produire, respectivement mémoriser, à des endroits traités de cette couche, des informations, caractérisé en ce que la couche d'enregistrement organique contient une quinacridone, une dithioquinacridone, une quinacridonequinone, une phtalocyanine, une dicéto-, monocétomonothiocéto- ou dithiocéto-pyrrolopyrrole.

2. Procédé selon la revendication 1, caractérisé en ce qu'on utilise en tant que quinacridones ou dithioquinacridones des composés de formules :

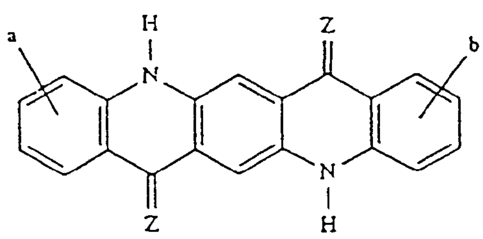

,

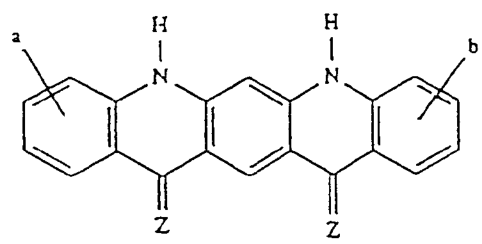

,

(I) (II)

où a et b représentent -H, -Cl, -Br, $-CH_3$ ou $-OCH_3$, et Z représente O ou S.

3. Procédé selon la revendication 2, où dans les formules I et II a et b représentent -H et Z représente S.

4. Procédé selon la revendication 1, caractérisé en ce qu'on utilise en tant que dicéto-, monocétomonothiocéto-, respectivement dithiocéto-pyrrolopyrroles, des composés de formule III :

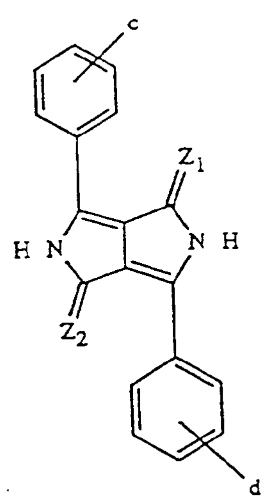

(III)

dans laquelle $Z_1$ et $Z_2$, indépendamment l'un de l'autre, représentent O ou S, et c et d, indépendamment l'un de l'autre, représentent -H, -Cl, $-CH_3$, $-OCH_3$, $-N(CH_3)_2$, $-SC_6H_5$ ou -S-alkyle avec 1 à 12 atomes de carbone.

5. Procédé selon la revendication 4, où $Z_1$ et $Z_2$ représentent S.

6. Procédé selon la revendication 4, où $Z_1$ et $Z_2$ représentent S, et c et d sont H.

7. Procédé selon la revendication 1, caractérisés en ce qu'on combine la couche d'enregistrement organique avec un système organique polymère/liant

8. Procédé selon la revendication 7, où on utilise un système polymère/liant transparent de la série comprenant le polycarbonate, la résine acrylique, la résine alkyde-mélamine, le polyméthacrylate de méthyle ou l'époxy.

9. Procédé selon la revendication 1, caractérisé en ce qu'on dépose la couche d'enregistrement sur une fine couche métallique réfléchissant la lumière, qui, de son côté, est déposée sur une base, respectivement un substrat.

10. Procédé selon la revendication 1, caractérisé en ce qu'on utilise une base, respectivement un substrat transparent, et on dépose d'abord sur la base une couche transparente conductrice en tant qu'électrode, puis sur celle-ci la couche d'enregistrement et finalement une fine couche métallique conductrice.

11. Procédé selon la revendication 1, caractérisé en ce que la couche d'enregistrement pour le procédé par réflexion a une épaisseur de 200 à 3000 Å et pour le procédé par photoconduction de 400 à 6000 Å.

12. Procédé selon la revendication 1, caractérisé en ce qu'on effectue le traitement local de la couche d'enregistrement organique par un solvant organique ou un mélange de solvants organiques à l'état liquide.

13. Procédé selon la revendication 12, où le solvant est l'acétone, la méthyléthylcétone, la méthylisobutylcétone, le méthanol, l'éthanol, l'acétate d'éthyle, le tétrahydrofuranne, le diméthylformamide ou un mélange de ces solvants.

14. Procédé selon la revendication 1, caractérisé en ce qu'on lit le changement spectral produit par le traitement au solvant dans le spectre d'absorption, respectivement l'information mémorisée, visuellement ou à l'aide d'un microlecteur.

15. Procédé selon la revendication 1, caractérisé en ce qu'on mesure le changement de la photoconductivité produit par le traitement au solvant à l'aide d'un système d'électrodes incorporé.

16. Procédé selon la revendication 1, caractérisé en ce qu'on utilise la couche d'enregistrement contenant l'information en tant que modèle photorécepteur.

17. Procédé selon la revendication 4, caractérisé en ce qu'on prétraite les composés de formule III avec un acide.

18. Procédé selon la revendication 17, caractérisé en ce qu'on utilise en tant que composé de formule III, le 1,4-dithiocéto-3,6-diphényl-pyrrolo-[3,4-c]-pyrrole (DTPP) et en tant qu'acide l'acide sulfurique en utilisant le diméthylsulfoxyde en tant que solvant.